# EUROPÄISCHE PATENTANMELDUNG

(11) **EP 1 134 439 A2**
(43) Veröffentlichungstag der Anmeldung: **19.09.2001**
(21) Anmeldenummer: 01105904.5
(22) Anmeldetag: 09.03.2001
(51) Int. Cl.: F16B 37/12

(54) **Metallischer Einsatz mit Rippen**

(30) Priorität: 17.03.2000 DE 10013091
(71) Anmelder: Böllhoff GmbH, 33649 Bielefeld (DE)
(72) Erfinder: Stumpf, Michael, Dipl.-Ing., 33611 Bielefeld (DE); Borchard, August, 32657 Lemgo (DE)
(74) Vertreter: Wehnert, Werner, Dipl.-Ing. Patentanwälte Hauck, Graalfs, Wehnert, Döring, Siemons

(57) **Zusammenfassung**

Metallischer Einsatz zum Einbetten in eine Aufnahmebohrung eines Aufnahmeteils aus einem Werkstoff niedrigerer Festigkeit. Der Einsatz hat einen Grundkörper (2) in Form mehrerer koaxial übereinander angeordneter Kegelstümpfe (4a-d) und einen Einstichabschnitt (7), der sich an den in Ausziehrichtung (x) letzten Kegelstumpf (4d) anschließt. In dem Einstichabschnitt sind mindestens zwei radial verlaufende Rippen (8) zum Erhöhen des Verdrehwiderstandes angeordnet. Der Einsatz hat daher trotz eines vergleichsweise geringen Einpreßwiderstandes sowohl einen hohen Ausziehwiderstand wie auch einen hohen Verdrehwiderstand.

## Beschreibung

Die vorliegende Erfindung betrifft einen metallischen Einsatz zum Einbetten in eine Aufnahmebohrung eines Aufnahmeteils aus einem Werkstoff niedrigerer Festigkeit, insbesondere aus thermoplastischem Kunststoff.

Derartige metallische Einsätze, insbesondere Gewindeeinsätze, werden in die Aufnahmebohrung des Kunststoffteils üblicherweise in der Weise eingebracht, daß der Einsatz in den durch Wärme oder Ultraschall aufgeschmolzenen Kunststoff eingepreßt wird (Warmeinbetten, Ultraschalleinschweißen). Es ist auch bekannt, den Einsatz durch Kalteindrücken oder Umspritzen in den Werkstoff des Kunststoffteils einzubringen. Um den Einsatz gegen Herausziehen wie auch gegen Verdrehen zu sichern, ist der Einsatz an seiner Umfangsfläche üblicherweise mit Oberflächenunregelmäßigkeiten wie z.B. Hinterschneidungen, Nuten, Rillen, Verzahnungen und dgl. versehen. So zeigt beispielsweise das US-Patent Nr. 4 046 181 einen Einsatz mit einem Grundkörper in Form mehrerer koaxial übereinander angeordneter Kegelstümpfe, die an ihrem Umfang durch Einkerbungen mit einer Verzahnung versehen sind. Durch die Einkerbungen läßt sich zwar der Einpreßwiderstand verringern und der Verdrehwiderstand erhöhen. Gleichzeitig verringert sich dadurch jedoch auch der Ausziehwiderstand. Die Forderungen nach einem geringen Einpreßwiderstand, einem hohen Ausziehwiderstand und einem hohen Verdrehwiderstand stehen somit in einem gewissen Widerspruch untereinander.

Der vorliegenden Erfindung liegt die Aufgabe zugrunde, einen metallischen Einsatz zum Einbetten in eine Aufnahmebohrung eines Aufnahmeteils niedrigerer Festigkeit zu schaffen, der trotz eines relativ kleinen Einpreßwiderstandes und eines relativ großen Ausziehwiderstandes einen möglichst großen Verdrehwiderstand hat.

Diese Aufgabe wird durch die in Anspruch 1 definierte Erfindung gelöst.

Der erfindungsgemäß ausgebildete Einsatz hat einen Grundkörper in Form mehrerer axial übereinander angeordneter Kegelstümpfe, an die sich ein Einstichabschnitt anschließt, in dem mindestens zwei radiale Rippen zum Erhöhen des Verdrehwiderstandes angeordnet sind.

Aufgrund der erfindungsgemäß vorgesehenen radialen Rippen brauchen die Kegelstümpfe nicht an ihrem Umfang mit Verzahnungen versehen zu werden. Der Verdrehwiderstand wird vielmehr durch die radialen Rippen erreicht, die ihrerseits den Einpreßwiderstand so gut wie nicht erhöhen. Andererseits hat der erfindungsgemäß ausgebildete Einsatz einen vergleichsweise hohen Ausziehwiderstand, da die Kegelstümpfe des Grundkörpers ohne Verzahnungen an ihrem Umfang auskommen.

Vielmehr genügt es, wenn in weiterer Ausgestaltung der Erfindung die Kegelstümpfe mit beispielsweise zwei Reihen axial fluchtend zueinander angeordneter Nuten versehen werden, die beim Einpressen des Einsatzes in die Aufnahmebohrung des zugehörigen Bauteils einen Materialfluß zu dem Einstichabschnitt hin ermöglichen. Vorteilhafterweise schließt sich an den Einstichabschnitt ein Ringflansch an, dessen Durchmesser gleich oder größer als der größte Außendurchmesser der radialen Rippen ist. Hierdurch wird sichergestellt, daß das beim Einpreßvorgang aufgeschmolzene oder in anderer Weise verformte Material des Aufnahmeteils sich in dem Aufnahmeabschnitt sammelt und dort verfestigt.

Der erfindungsgemäß ausgebildete Einsatz hat trotz eines vergleichsweise geringen Einpreßwiderstandes einen hohen Auszieh- und Verdrehwiderstand. Außerdem hat er eine vergleichsweise einfache geometrische Form, so daß er sich kostengünstig herstellen läßt.

Weitere vorteilhafte Ausgestaltungen der Erfindung sind in den Unteransprüchen definiert.

Anhand der Zeichnung wird ein bevorzugtes Ausführungsbeispiel der Erfindung näher erläutert. Es zeigt:
- Fig. 1: eine perspektivische Ansicht eines Einsatzes;
- Fig. 2: eine Seitenansicht des Einsatzes in Fig. 1;
- Fig. 3: eine gegenüber Fig. 2 um 90° gedrehte Seitenansicht des Einsatzes;
- Fig. 4: eine Ansicht des Einsatzes von unten;
- Fig. 5: die in Fig. 2 mit y bezeichnete Einzelheit;
- Fig. 6: die in Fig. 2 mit x bezeichnete Einzelheit.

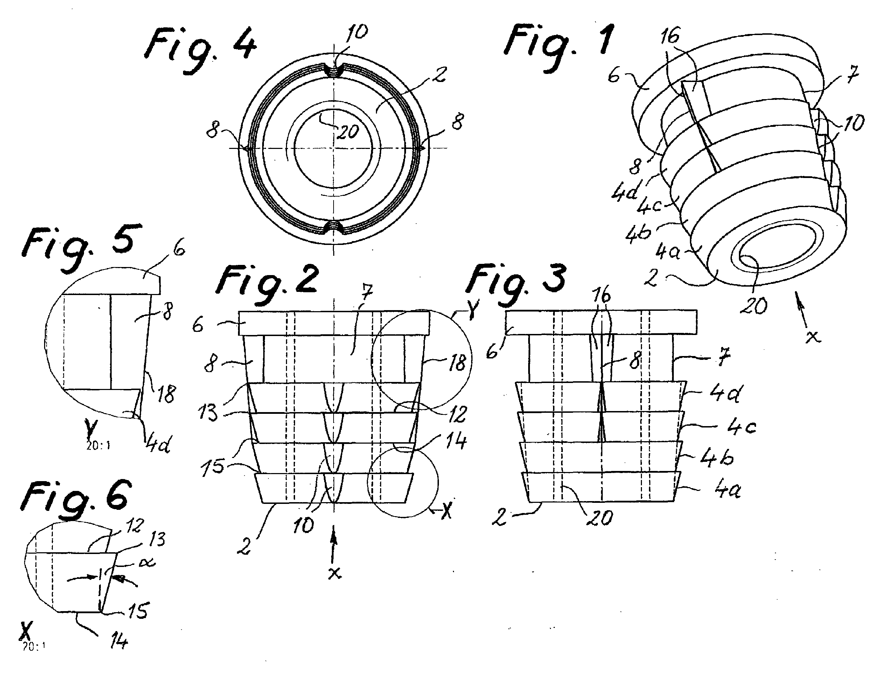

Der in den Figuren 1 bis 4 dargestellte metallische Einsatz dient zum Einbetten in der Aufnahmebohrung eines Aufnahmeteils (nicht gezeigt), das aus einem Werkstoff niedrigerer Festigkeit wie z.B. Kunststoff besteht. Vorzugsweise wird der Einsatz nachträglich durch Warm- Ultraschall- oder Induktiv-Einbetten in ein Aufnahmeteil aus thermoplastischem Kunststoff eingesetzt. Alternativ hierzu kann jedoch der Einsatz durch Umspritzen oder Umpressen in einem Urformprozeß (als Einlegemetall) in das Aufnahmeteil eingebettet werden.

Der Einsatz hat einen Grundkörper 2, der sich aus mehreren koaxial übereinander angeordneten Kegelstümpfen 4a-d zusammensetzt. Der Grundkörper 2 hat eine allgemein kegelstumpfförmige Gestalt, um den Einbettvorgang zu erleichtern. Dies hat darüber hinaus den Vorteil, daß die Energie, die beim Warmeinbetten zum Plastifizieren des Kunststoffs erforderlich ist, schneller vom metallischen Einsatz auf das Aufnahmeteil übertragen werden kann. Es versteht sich jedoch, daß je nach den Erfordernissen des speziellen Anwendungsfalls der Grundkörper 2 auch allgemein zylindrisch ausgebildet werden kann.

Die Kegelstümpfe 4a bis 4d haben zweckmäßigerweise die gleiche Höhe, welche je nach Material und Abmessungen des Aufnahmeteils gewählt und mit einem gewissen Prozentsatz der Gesamtlänge des Einsatzes angesetzt wird. Um die allgemeine Kegelstumpfform des Grundkörpers zu erzielen, verringern sich die Durchmesser der Kegelstümpfe 4a-d schrittweise entgegen der Ausziehrichtung, die in den Figuren 1 und 2 mit dem Pfeil x bezeichnet ist. Genauer gesagt, liegen die Umfangslinien 13 und 15 der großen und kleinen Grundflächen 12 bzw. 14 der Kegelstümpfe 4a-d jeweils auf einer gedachten Kegelstumpffläche, deren Kegelwinkel vorzugsweise ungefähr 4° beträgt. Es versteht sich jedoch, daß dieser Kegelwinkel je nach Anwendungsfall auch größer oder kleiner gewählt werden kann.

Der Kegelwinkel der Kegelstümpfe 4a bis 4d liegt vorzugsweise zwischen 60° und 90°, d.h. der halbe Kegelwinkel α (siehe Fig. 6) liegt zwischen 30° und 45°. Je größer der Kegelwinkel α ist, desto größer werden die Hinterschnitte zwischen den einzelnen Kegelstümpfen, was sowohl den Einpreßwiderstand wie auch den Ausziehwiderstand erhöht. Hier muß daher je nach Anwendungsfall und insbesondere je nach Festigkeit des Materials des Aufnahmeteils ein sinnvoller Kompromiß gefunden werden. Grundsätzlich ist davon auszugehen, daß der Winkel α umso größer gewählt werden muß, je geringer die Festigkeit des Materials des Aufnahmeteils ist.

An der großen Grundfläche 12 des in Ausziehrichtung letzten Kegelstumpfes 4d schließt sich ein Einstichabschnitt 7 in Form einer Ringnut an, der auf der entgegengesetzten Seite von einem Ringflansch 6 begrenzt wird. Im dargestellten Ausführungsbeispiel sind sowohl die Umfangsfläche des Einstichabschnittes 7 wie auch die Umfangsfläche des Ringflansches 6 kreiszylindrisch ausgebildet. Es versteht sich, daß jedoch auch hiervon abweichende geometrische Formen möglich sind.

In dem Einstichabschnitt 7 sind zwei um 180° gegeneinander versetzte radiale Rippen 16 vorgesehen. Es könnten jedoch auch mehr als zwei radiale Rippen, beispielsweise drei oder vier Rippen vorgesehen werden.

Wie insbesondere aus den Figuren 1 und 3 hervorgeht, haben die Rippen 8 jeweils zu einer Axialebene geneigte Seitenflächen 16, die zwischen sich einen Winkel von ungefähr 30° bis 60° einschließen. Die radial äußeren Seiten 18 der Rippen 8 sind geringfügig schräg verlaufend ausgebildet, und zwar entsprechend der allgemeinen Kegelstumpfform des Grundkörpers 2. Die radial äußeren Seiten 18 der beiden diametral gegenüberliegenden Rippen 8 schließen somit zwischen sich ebenfalls einen Winkel von ca. 4° ein.

Wie in den Figuren 1 bis 3 dargestellt, sind die Rippen 8 von dem Einstichabschnitt 7 aus in den Bereich der Kegelstümpfe 4d und 4c hinein axial verlängert und könnten z.B. auch bis in den Bereich des Kegelstumpfes 4b hinein verlängert werden. Die Anordnung ist hierbei so getroffen, daß die radial äußeren Seiten 18 der Rippen 8 auf der gedachten kegelstumpfförmigen Mantelfläche liegen, auf der auch die Umfangslinien 13 der großen Grundflächen 12 der Kegelstümpfe 8 liegen. Der maximale Durchmesser der radial außen liegenden Seiten 18 der Rippen 8 (angrenzend an dem Ringflansch 6) ist hierbei gleich oder kleiner als der Außendurchmesser des Ringflansches 6.

Der Einstichabschnitt 7 dient zur Aufnahme von Material des Aufnahmeteils, das bei dem Einpreßvorgang verformt und verdrängt wird. Der Einstichabschnitt 7 dient somit als "Staustufe" für das verformte Material und sorgt für einen großen Hinterschnitt (Formschluß) zur Erhöhung des Ausziehwiderstandes (der axialen Belastbarkeit). Der Ringflansch 6 verhindert einen Austritt von Material aus dem Einstichabschnitt 7. Je nach Anwendungsfall kann jedoch auch auf den Ringflansch verzichtet werden.

Die radialen Rippen 8 sorgen für einen hohen Verdrehwiderstand. Aufgrund ihrer speziellen geometrischen Ausgestaltung behindern sie nicht den Finde- und Einpreßvorgang.

Die Kegelstümpfe 4a-d sind an ihrem Umfang mit axial verlaufenden Nuten 10 versehen. Wie aus den Figuren 1 bis 4 hervorgeht, sind die Nuten 10 in zwei Reihen axial zueinander fluchtender Nuten angeordnet, die zu den beiden Rippen 8 in Umfangsrichtung um 90° versetzt angeordnet sind. Statt zwei Reihen könnten auch mehr Reihen, beispielsweise drei oder vier Reihen vorgesehen werden.

Die Nuten 10 ermöglichen beim Einpreßvorgang einen Materialfluß in Ausziehrichtung x jeweils zu dem nächstfolgenden Kegelstumpf und schließlich in den Einstichabschnitt 7. Falls die Aufnahmebohrung als Sackbohrung ausgebildet ist, ermöglichen sie außerdem ein "Entlüften" der Sackbohrung, so daß sich unter dem Einsatz kein "Luftpolster" bilden kann, das dem Einsatz einen unerwünschten "Auftrieb" geben würde. Das in den Nuten 10 verbleibende Material trägt außerdem zur Erhöhung der Verdrehfestigkeit bei.

Der in der Zeichnung dargestellte Einsatz ist als Gewindeeinsatz mit einer Gewindebohrung 20 versehen. Es versteht sich jedoch, daß statt einer Gewindebohrung 20 je nach Anwendungszweck auch eine glatte Bohrung vorgesehen werden könnte. Stattdessen könnte der Einsatz auch als Bolzen oder zum Ausüben einer anderen Funktion eingesetzt werden.

Wie bereits erläutert, wird der beschriebene metallische Einsatz vorzugsweise durch Warmeinbetten in die Aufnahmebohrung eines aus einem plastischen Kunststoff bestehenden Aufnahmeteils eingepreßt. Der Einsatz und die Aufnahmebohrung sind hierbei so dimensioniert, daß der Einsatz bis zu ungefähr seiner Hälfte ohne äußeren Kraftaufwand in die Aufnahmebohrung eingesetzt werden kann. Die allgemein kegelige Form des Grundkörpers 2 dient hierbei als "Findehilfe". Der Einsatz wird dann mit einer vorgegebenen Einpreßkraft entgegen der Ausziehrichtung x in das aufgeschmolzene Kunststoffmaterial der Aufnahmebohrung eingepreßt. Hierbei fließt aufgeschmolzenes Material durch die axialen Nuten 10 in die "Hinterschnittbereiche" der einzelnen Kegelstümpfe 4a-d, in denen sich das aufgeschmolzene Material verteilt und dort gewissermaßen jeweils eine "Staustufe" bildet. Ein Großteil des aufgeschmolzenen Materials gelangt schließlich in die letzte und wichtigste "Staustufe", die von dem Einstichabschnitt 7 gebildet wird. Das aufgeschmolzene Material füllt dann den Einstichabschnitt 7, wobei der Ringflansch 6 ein Austritt von Material aus dem Einstichabschnitt 7 verhindert. Das in die Hinterschnittbereiche der Kegelstümpfe 4a-d und in den Einstichabschnitt 2 geflossene Material härtet beim Erkalten aus. Hierbei sorgen die Hinterschnittbereiche der Kegelstümpfe 4a-d und insbesondere der Einstichabschnitt 7 für einen hohen Ausziehwiderstand in Ausziehrichtung x, während die axialen Nuten 10 und insbesondere die radialen Rippen 8 für einen hohen Verdrehwiderstand sorgen.

## Patentansprüche

1. Metallischer Einsatz zum Einbetten in eine Aufnahmebohrung eines Aufnahmeteils aus einem Werkstoff niedrigerer Festigkeit, mit einem Grundkörper (2) in Form mehrerer koaxial übereinander angeordneter Kegelstümpfe (4a-d) und einem Einstichabschnitt (7), der sich an den in Ausziehrichtung (x) letzten Kegelstumpf (4d) anschließt und einen Durchmesser hat, der kleiner als der größte Durchmesser dieses Kegelstumpfes (4d) ist, wobei in dem Einstichabschnitt (7) mindestens zwei radial verlaufende Rippen (8) zum Erhöhen des Verdrehwiderstandes angeordnet sind.

2. Einsatz nach Anspruch 1, **dadurch gekennzeichnet, daß** zwei um 180° gegeneinander versetzte Rippen (8) vorgesehen sind.

3. Einsatz nach Anspruch 1 oder 2, **dadurch gekennzeichnet, daß** die Rippen (8) in den Bereich der Kegelstümpfe (4a bis d) hinein axial verlängert sind.

4. Einsatz nach einem der vorhergehenden Ansprüche, **dadurch gekennzeichnet, daß** jede der Rippen (8) zwei zu einer Axialebene geneigte Seitenflächen (16) hat,die zwischen sich einen Winkel von ca. 30° bis 60° einschließen.

5. Einsatz nach einem der vorhergehenden Ansprüche, **dadurch gekennzeichnet, daß** die Umfangslinien (13) der großen Grundflächen (12) der Kegelstümpfe (4a-d)) auf einer gedachten kegelstumpfförmigen Mantelfläche liegen, die in Ausziehrichtung (x) divergiert.

6. Einsatz nach Anspruch 5, **dadurch gekennzeichnet, daß** die radial äußeren Seiten (18) der Rippen (8) geringfügig schräg verlaufend so ausgebildet sind, daß sie auf der gedachten kegelstumpfförmigen Mantelfläche liegen.

7. Einsatz nach Anspruch 5 oder 6, **dadurch gekennzeichnet, daß** der Kegelwinkel der gedachten kegelstumpfförmigen Mantelfläche ungefähr 4° beträgt.

8. Einsatz nach einem der vorhergehenden Ansprüche, **dadurch gekennzeichnet, daß** sich an den Einstichabschnitt (7) ein Ringflansch (6) anschließt, dessen Durchmesser gleich oder größer als der größte Außendurchmesser der Rippen (8) ist.

9. Einsatz nach einem der vorhergehenden Ansprüche, **dadurch gekennzeichnet, daß** die Kegelstümpfe (4a-d) an ihrem Umfang mit axial verlaufenden Nuten (10) versehen sind.

10. Einsatz nach Anspruch 9, **dadurch gekennzeichnet, daß** die Nuten (10) in einer oder mehreren axialen Reihen angeordnet sind.

11. Einsatz nach Anspruch 10, **dadurch gekennzeichnet, daß** die Reihe oder Reihen der Nuten (10) in Umfangsrichtung um 90° gegenüber den Rippen (8) versetzt sind.

12. Einsatz nach einem der Ansprüche 9 bis 11, **dadurch gekennzeichnet, daß** die Nuten (10) einen gerundeten Querschnitt haben.

13. Einsatz nach einem der vorhergehenden Ansprüche, **dadurch gekennzeichnet, daß** die Kegelstümpfe (4a-d) die gleiche axiale Höhe haben.

14. Einsatz nach einem der vorhergehenden Ansprüche, **dadurch gekennzeichnet, daß** der halbe Kegelwinkel (α) der Kegelstümpfe (4a-d) ungefähr 30° bis 45° beträgt.

15. Einsatz nach einem der vorhergehenden Ansprüche, **dadurch gekennzeichnet, daß** der Grundkörper (2) eine zentrale Gewindebohrung (20) oder andere Bohrung hat.
